Europäisches Patentamt

European Patent Office

Office européen des brevets

(11) Veröffentlichungsnummer: **0 237 794**
B1

# (12) EUROPÄISCHE PATENTSCHRIFT

(45) Veröffentlichungstag der Patentschrift:
27.06.90

(21) Anmeldenummer: 87102029.3

(22) Anmeldetag: 13.02.87

(51) Int. Cl.⁵: **B60B 27/00,** F16C 33/60,
F16D 3/20

(54) Lagerungsanordnung für die angetriebenen Räder eines Kraftfahrzeuges.

(30) Priorität: 15.03.86 DE 3608728

(43) Veröffentlichungstag der Anmeldung:
23.09.87 Patentblatt 87/39

.㊺ Bekanntmachung des Hinweises auf die Patenterteilung:
27.06.90 Patentblatt 90/26

(84) Benannte Vertragsstaaten:
CH DE ES FR GB IT LI SE

(56) Entgegenhaltungen:
EP-A- 0 059 339
GB-A- 2 087 039
US-A- 3 302 987

(73) Patentinhaber: JACOB, Werner, Briandring 29,
D-6000 Frankfurt 70(DE)

(72) Erfinder: JACOB, Werner, Briandring 29,
D-6000 Frankfurt 70(DE)

(74) Vertreter: Harwardt, Günther, Dipl.-Ing., HARWARDT
NEUMANN PATENTANWÄLTE
Scheerengasse 2 Postfach 1455, D-5200 Siegburg 2(DE)

## Beschreibung

Die Erfindung bezieht sich auf eine Lagerungsanordnung für die angetriebenen Räder eines Kraftfahrzeuges, mit einem zweireihigen, Radial- und Axialkräfte aufnehmenden Wälzlager, insbesondere einem Doppelschrägkugellager, mit einem zweigeteilten Lagerinnenring, dessen beiden Teile je eine Laufbahn für die Wälzkörper aufweisen und bei dem eine Teil einstückig mit einem Flansch zur Anbringung eines Fahrzeugrades verbunden ist, wobei Mittel zur drehfesten Verbindung mit einem Gelenkteil, insbesondere eines Gleichlaufdrehgelenkes, zum Antrieb des Flanches vorgesehen sind, und mit einem ungeteilten Lageraußenring zur Befestigung am Radträger des Fahrzeuges.

Es sind beispielsweise Lagerungsanordnungen bekannt, bei denen der Lagerinnenring einstückig ausgebildet ist. Außerdem ist der Lagerinnenring einsteilig mit dem Radflansch ausgebildet. Der Lageraußenring ist ungeteilt und dient zur Befestigung am Radträger. Der Lagerinnenring weist ausgehend von einer Strinseite Ausnehmungen auf, in denen ein Gelenkteil eines Gleichlaufdrehgelenkes zum Antrieb des Radflanches formschlüssig aufgenommen ist.

Die einteilige Ausführungsform ist insofern nachteilig, daß die beiden zueinander beabstandeten Lagerreihen nur teilweise mit Lagerkugeln gefüllt werden können. Die Anzahl der Lagerkugeln ist jedoch im wesentlichen bestimmend für die Tragfähigkeit des Lagers. In der Regel ist nur ein Füllungsgrad von .etwa 50 % erreichbar. Nach dem Einbringen der Kugeln müssen diese anschließend auf dem Umfang verteilt werden und der sie haltende Käfig ist axial einzufädeln. Ein solcher Käfig ist kompliziert und benötigt für das Einfädeln eine gewisse Flexibilität.

Von Nachteil bei der gewählten Bauform ist außerdem, daß die Befestigung des Gelenkteiles eine axiale Verlängerung des Lagerinnenringes benötigt, und zusätzliche Sicherungsmittel. Im Falle eines Lagerschadens muß der Innenring zusammen mit dem Außenring, d. h. die komplette Lagerung an sich ausgetauscht werden (DE-PS 3 041 855).

Um den Nachteil der nur teilweisen Füllungsmöglichkeit des Lagers mit Lagerkugeln zu vermeiden, ist es auch bekannt, den inneren Lagerring als gesondertes Bauteil von dem den Radflansch tragenden Nabenteil, das auch zur Verbindung mit dem Gelenkteil eines Gleichlaufdrehgelenkes dient, getrennt auszubilden. Dabei können zwei innere Lagerringe, die seperat zu fertigen sind, vorgesehen sein, es kann aber auch vorgesehen sein, daß eine Laufbahn, d. h. eine innere Laufbahn der Nabe direkt zugeordnet ist und nur der zweite Ring, der die andere Laufbahn aufweist, als getrenntes Bauteil ausgebildet ist. Der Nachteil bei solcher Ausbildung ist, daß ein erhöhter Fertigungsaufwand für die Herstellung der Lagerbauteile zu treiben ist, denn die Außenfläche der Radnabe muß eine entsprechende Sitzfläche aufweisen. Darüberhinaus muß auch die Radnabe eine bestimmte Materialstärke aufweisen, um das eingeleitete Drehmoment übertragen zu können. Ferner müssen auch die separaten Lagerinnenringe eine bestimmte Mindeststärke aufweisen, damit sich diese nicht beim Herstellungsschritt oder bei der nachfolgenden Montage verziehen. Solcher Verzug würde zu ungleichen Tragverhältnissen in der Lagerung führen. Dies hätte eine Verkürzung der Lebensdauer des Lagers zur Folge (DE-OS 3 042 449).

Die gemeinsame Fertigung von Lagerringen von zweireihigen Schrägschulterlagern ist an sich bekannt, wobei nach der Herstellung äußerer und innerer Lagerring durch Sprengen, d. h. durch Aufbringen von radialem Druck wieder geteilt werden. Bei solchen Lagern ( US-PS 3 672 737) sind jedoch gesonderte Halteelemente erforderlich, um die Lagerringe in einem genauen Abstand zueinander zu halten. Dies erfolgt in Form von verformten Blechaufnahmeringen. Solche Lagerungen sind jedoch nur begrenzt für die Aufnahme von Radial- und Axialkräften einsetzbar, insbesondere dann, wenn außermittig Radialkräfte aufgebracht werden, so daß Kippmomente auf die Lagerungsanordnung einwirken. Die inneren geteilten Lagerringe können nämlich begrenzt zueinander Verschiebungen ausführen. Eine genaue Fertigung der sie aufnehmenden Bauteile ist daher erforderlich.

Hiervon ausgehend liegt der vorliegenden Erfindung die Aufgabe zugrunde, eine Lagerungsanordnung für die angetriebenen Räder eines Kraftfahrzeuges zu schaffen, dessen Lager eine möglichst hohe Tragfähigkeit bezogen auf den Durchmesser und damit eine geringe Masse aufweist und bei der keine zusätzlich Maßnahme hinsichtlich der Verbindung von Gelenk und Lager zwecks Weiterleitung des Drehmomentes erforderlich sind.

Diese Aufgabe wird erfindungsgemäß dadurch gelöst, daß der zunächst ungeteilte Lagerinnenring mit einbaufertigen Maßen hergestellt und anschließend durch Aufbringen von Druck durch Sprengen geteilt wird, daß die Sprengfuge im Bereich zwischen den beiden Laufbahnen der beiden Innenringteile angeordnet ist, daß als Mittel zur Befestigung mit einem Gelenkteil Ausnehmungen vorgesehen sind, in die entsprechende Vorsprünge des Gelenkteiles eingreifen und daß die Sprengfuge durch die Ausnehmungen verläuft und die beiden Innenringteile im montierten Zustand einander gegenüber verspannt sind.

Von Vorteil bei dieser Ausbildung ist, daß der Lagerinnenring zunächst fertig hergestellt werden kann und aufgrund seiner radialen Stärke keine Verzüge insbesondere bei der Wärmebehandlung auftreten. Es können also hohe Bearbeitungsgenauigkeiten eingehalten werden, die sich günstig auf die Lebensdauer des Lagers auswirken. Darüberhinaus sind weniger Paßflächen erforderlich, und es wird dadurch eine kostengünstige Gestaltung des inneren Laufringes möglich. Durch die gewählte Form des Teilens durch Sprengen wird außerdem erreicht, daß die beiden daraus entstehenden Lagerinnenringteile aufgrund der Oberflächenstruktur nur in einer ganz bestimmten Position wieder zueinander montiert werden können. Diese Oberflächenstruktur sorgt des weiteren dafür, daß die Aufnahme von Kippmomenten ohne weiteres möglich ist, ohne daß sich negative Einflüsse auf die Zentrierung oder eine ungleiche Belastung der einzelnen Lagerreihen ergeben könnte. Ein weiterer Vorteil wird dadurch erreicht, daß die Aufnahmeausnehmungen für die Befestigung des Gelenkteiles des Gleichlaufdrehgelenkes durch den Sprengvorgang gleichzeitig für das Einfügen bzw. Montieren der Vorsprünge des Gelenkteiles freigelegt werden.

Ferner wird schließlich durch die Teilung eine kompakte Bauweise des Lagers erreicht, denn die einzelnen Lagerreihen können mit einem höheren Grad gefüllt werden, d. h. es können über den Umfang gesehen mehr Kugeln untergebracht werden, als dies üblicherweise bei ungeteilten Versionen der Fall ist. Es kann nahezu eine hundertprozentige Füllung erreicht werden. Außerdem ist eine Vereinfachung der Käfige für die Wälzlagerreihen die Folge, so daß eine ganz normale axiale Montage erfolgen kann. Die Zusammenfügung der beiden Lagerringinnenteile durch die Schraubverbindung erzeugt gleichzeitig eine axiale Halterung und auch für eine drehmomentmäßige Verbindung zwischen dem Lagerinnenring und damit dem Radflansch und dem Gelenk, in den ein Drehmoment über die Antriebswelle eingeleitet wird.

Eine besonders günstige Gestaltung und Einleitung der Momente ergibt sich dann, wenn die Sprengfuge unter einem Winkel, der von 90° abweicht, die Lagerachse schneidet. Es entstehen dadurch zwei konische Flächen und zwar eine Außenkonusfläche und eine Hohlkonusfläche, die im montierten Zustand ineinandergreifen. Hierdurch wird außerdem erreicht, daß die Sprengfuge im Bereich der Ausnehmungen schräg verläuft, sodaß sie also die Drehmomentübertragungsebene schneidet und keine Umfangskräfte wirksam werden, die voll auf die Trennfuge einwirken.

Um einen gezielten Verlauf der Sprengfuge zu erreichen ist vorgesehen, daß Lagerinnenring vor dem Sprengen mit Kerben zur gerichteten Teilung versehen ist. Bevorzugt sind dazu auf der Außen- und auf der Innenfläche des Lagerinnenringes ringförmig verlaufende Kerben angebracht. Ist ein schräger Verlauf der Sprengfuge vorgesehen, sind die Kerben entlang der Lagerachse axial zueinander versetzt angeordnet.

Zu ihrer Verbindung weisen die beiden Innenringteile zueinander fluchtende Bohrungen zur Aufnahme von Verbindungsschrauben auf. Dabei kann die Bohrung eines der Ringteile als Gewindebohrung, die andere als Durchgangsbohrung ausgebildet sein. Es ist jedoch auch möglich beide Bohrungen als Durchgangsbohrungen vorzusehen und eine durchgehende Schraube hindurchzustecken und an der anderen Stirnfläche mit einer Mutter zu verspannen.

Besonders günstig ist die Anwendung einer solchen Lagerungsanordnung dann, wenn eine Gleichlaufdrehgelenk gewählt wird, das als Tripodegelenk ausgebildet ist. Ein solches Gelenk weist ein Gelenkteil auf, das drei von einem zentralen Teil ausgehend, auf den Umfang gleichbeabstandete, zylindrische Zapfen besitzt. Auf den Zapfen sind Rollen dreh- und axialbewegbar angeordnet. Die Rollen selbst sind wieder in Bahnen des anderen Gelenkteiles geführt und das andere Gelenkteil ist mit einer Antriebswelle zur Einleitung des Drehmomentes verbunden. Die drei Zapfen der ersten Gelenkteiles sind in drei entsprechenden Ausnehmungen des Lagersinnenringes aufgenommen.

Es ist jedoch auch möglich, andere Gattungen von Gelenken vorzusehen, wobei dann eines der Gelenkteils den Zapfen eines Tripodegelenkes entsprechende radial vorstehende Ansätze aufweist. Dabei ist es nicht erforderlich, daß es sich um zylindrische Zapfen handelt. Es könnten auch andere Formgestaltungen vorgesehen werden. Wichtig ist nur, daß, die Formgestaltung so gewählt wird, daß zum einen Umfangskräfte übertragen werden können und zum anderen eine axiale Halterung gewährleistet ist.

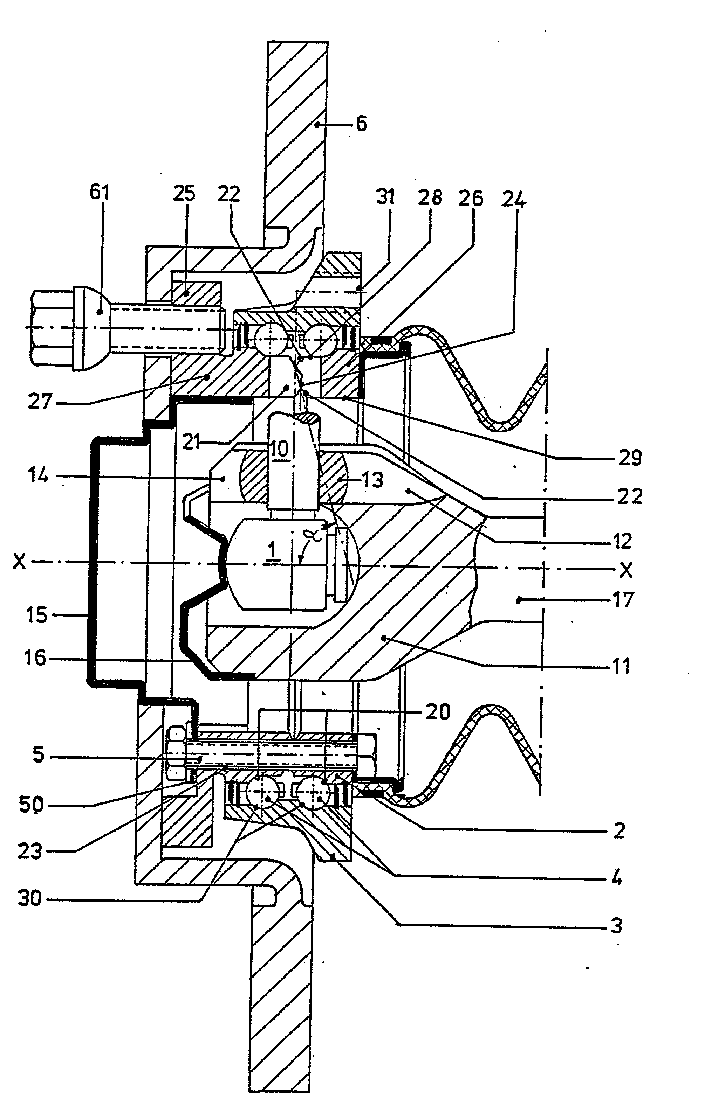

Ein bevorzugtes Ausführungsbeispiel der Erfindung ist in der Zeichnung dargestellt.

Die Lagerungsanordnung weist im wesentlichen einen äußeren Lagerring 3, einen konzentrisch dazu angeordneten inneren Lagerring 2, zwischen beiden angeordnete Wälzkörper in Form von Kugeln 4 und ein Gleichlaufdrehgelenk, bestehend aus einem ersten Gelenkteil 1 und einem zweiten Gelenkteil 11 auf.

Der Lageraußenring 3 besitzt entweder eine flanschförmige Erweiterung oder Ansätze, welche mit Bohrungen 31 zur Befestigung am Radträger des Kraftfahrzeuges versehen sind. Der Lagerinnenring 7 ist einstückig mit dem Radflansch 25 verbunden. Der Radflansch 25 dient zur Anbringung der Bremsscheibe 6 und zur Befestigung eines Fahrzeugrades über Befestigungsschrauben 61. Der Lagerinnenring 2 weist eine Bohrung mit der Innenfläche 29 auf. Dieser Hohlraum ist durch die Kappe 15 zur einen Seite hin verschlossen. Zur anderen Seite hin erfolgt eine Abdichtung über einen Faltenbalg, der einerseits am Lagerinnenring 2 und andererseits an die Antriebswelle 17 dichtend angeschlossen ist.

Der Lageraußenring 3 ist ungeteilt ausgebildet. Er weist zwei Laufbahnen 30 auf. Diese beiden Laufbahnen 30 sind im axialen Abstand zueinander angeordnet. Die Laufbahnen 30 sind so angeordnet, daß sie nach außen weisen, so daß sich zwischen ihnen eine schulterförmige Erhöhung ergibt. Diese schulterförmige Erhöhung ist als Ringschulter ausgebildet. In den Laufbahnen 30 sind Lagerkugeln 4 abwälzend geführt. Hierzu sind die Kugeln 4 in nicht näher dargestellten Käfigen gehalten. Den Laufbahnen 30 liegen diagonal gegenüber Laufbahnen 20, die dem inneren Lagerring 2 zugeordnet sind. Der innere Lagerring 2 wird zunächst einteilig hergestellt und weist beide Laufbahnen 20 auf. Die Herstellung des inneren Lagerringes 2 erfolgt so, daß die für den Zusammenbau der Lagerungsanordnung erforderlichen Endmaße erreicht sind. Bei der Herstellung wird der innere Lagerring 2 ausgehend von seiner Außenfläche 28 mit einer sich über seinen Umfang erstreckenden Kerbe 22 versehen. Außerdem wird er in seiner Innenfläche 29 mit einer weiteren sich über deren Umfang erstreckenden Ringkerbe 22 versehen. Die beiden Ringkerben 22 in der Außenfläche 28 bzw. Innenfläche 29 sind axial zueinander versetzt, können jedoch auch in der gleichen Ebene liegen. Nach der Fertigstellung des Lagerinnenringes 2, insbesondere nach dem Härten, wird radial Druck auf den Lagerring 2 aufgebracht, und zwar insbesondere in dem Bereich seiner kerben 22. Der Druck wird in einer Größenordnung aufgebracht, daß der Lagerinnenring 2 in zwei Lagerringteile 26 und 27 gesprengt wird. Die Sprengfuge 24 verläuft von der auf der Außenfläche angebrachten Kerbe 28 zu der in der Innenfläche 29 angebrachten Kerbe 22. Die Sprengfuge 24 ist unregelmäßig und erlaubt nur ein Zusammensetzen der beiden Ringteile 26 und 27 in einer ganz bestimmten Stellung nämlich der, in der sie ursprünglich miteinander verbunden waren. Aufgrund dieser unregelmäßigen Struktur ist eine innige Verbindung zwischen den beiden Lagerinnenringteilen 26 und 27 möglich. Zur drehfesten Verbindung mit dem Gelenkteil 1 des Tripodegelenkes sind entsprechend der Anordnung der Zapfen 10 des Gelenkteiles 1 zylindrische Bohrungen 21 im Bereich der Sprengfuge 24 angeordnet. Durch die aus der Sprengung folgende Teilung können die Zapfen 10 axial montiert werden. Ebenfalls ist eine axiale Montage der Lagerkugeln 4 möglich. Beispielsweise können die Lagerkugeln 4 schon im Käfig vormontiert gehalten werden. Sie werden beispielsweise zunächst auf die Laufbahn 20, die dem Lagerinnenringteil 27 mit Flansch 25 zugeordnet ist, aufgeschoben, dann erfolgt das Aufschieben des Lageraußenringes 3, des ersten Gelenkteiles 1 mit den Zapfen 10 in die entsprechenden Ausnehmungen 21 und schließlich die axiale Montage der zweiten Reihe Kugeln 4 mit Käfig und des zweiten Lagerinnenringteiles 26. Anschließend werden die beiden Lagerinnenringteile 27 und 26 einander gegenüber verspannt. Hierdurch wird dann gleichzeitig eine drehfeste Verbindung zwischen dem Gelenkteil 1 und dem Lagerinnenring 2 und damit zum Radflachen 25 hin zum Antrieb des Fahrzeugrades erreicht. Zwischen dem Lageraußenring 3 und dem Lagerinnenring 2 sind ferner Dichtungen angeordnet, von denen die eine bei der Montagefolge zuerst und die andere zuletzt eingesetzt wird. Der Lagerinnenring 2 weist Befestigungsbohrungen 23 auf, die durchgehend durch beide Lagerinnenringteile 26 und 27 verlaufen. In diese sind Verbindungsschrauben 5 eingesetzt. Die Mutter der Verbindungsschraube 5 ist durch eine Sicherungsscheibe 50 gegen Lösen gesichert.

Das Gleichlaufdrehgelenk ist im vorliegenden Beispiel als Tripodegleichlaufgelenk ausgebildet. Der erste Gelenkteil 1 weist ausgehend von einem zentralen Teil abstehende Zapfen 10 auf. Diese Zapfen 10 stehen radial von diesem zentralen Teil ab. Es sind drei Zapfen 10 umfangsverteilt vorgesehen. Auf den Zapfen 10 sind Rollen 13 mit einer zylindrischen Bohrung sowohl axial als auch drehbar gelagert. Die Rollen 13 weisen eine außen kugelige Kontur auf. Mit dieser Kontur sind sie in entsprechend ausgebildeten Laufbahnen 14 eines zweiten Gelenkteiles 11 in Form einer Gabel 12 mit drei umfangsverteilten Gabelarmen und den dazwischen angeordneten Laufbahnpaaren 14 aufgenommen. Das zweite Gelenkteil 11 ist dann wiederum mit einer Antriebswelle 17 drehfest, insbesondere einstückig, verbunden.

Ferner ist eine Haltefeder 16 vorgesehen, die eine axial feste Verbindung zwischen dem ersten Gelenkteil 1 und dem zweiten Gelenkteil 11 bewirkt. Es handelt sich daher um ein Gelenk, das nur Winkelbewegungen, jedoch keine Axialbewegungen zuläßt.

Es ist die Verwendung auch von Gleichlaufdrehgelenken anderer Gelenkgattungen möglich, wobei jeweils eines der Gelenkteile jedoch auf seiner Außenkontor oder über diese hinausstehend Ansätze aufzuweisen hat, welche in entsprechende Ausnehmungen des Lagerinnenringes 2 eingreifen. Die Ansätze und die Ausnehmungen sind aneinander angepaßt. Auf jeden Fall ist die Anordnung so zu treffen, daß die Sprengfuge im Bereich dieser Ausnehmungen von der Außenfläche 28 des Lagerinnenringes 2 zur Innenfläche 29 verläuft. Die Teilung erfolgt also im Bereich dieser Ausnehmungen 21.

Bezugszeichenliste

1 Erstes Gelenkteil (Tripode)
10 Tripodezapfen
11 zweites Gelenkteil
12 Gabel
13 Rollen
14 Rollenlaufbahn
15 Kappe
16 Haltefedern
17 Antriebswelle
2 Lagerinnenring
20 Laufbahn des Lagerinnenringes
21 Ausnehmung
22 Sprengkerbe
23 Bohrung für Verbindungsschraube
24 Sprengfuge
25 Radflansch
26 erstes Lagerinnenringteil
27 zweites Lagerinnenteil
28 Außenfläche Lagerinnenring
29 Innenfläche Lagerinnenring
3 Außenring
30 äußere Laufbahn
31 Befestigungsbohrungen
4 Lagerkugeln
5 Verbindungsschraube
50 Sicherungsscheibe
6 Bremsscheibe
61 Radbefestigungsscchraube
X-X Lagerachse
α Schrägungswinke

## Patentansprüche

1. Lagerungsanordnung für die angetriebenen Räder eines Kraftfahrzeuges, mit einem zweireihigen Radial- und Axialkräfte aufnehmenden Wälzlager, insbesondere einem Doppelschrägkugellager, mit einem zweigeteilten Lagerinnenring, dessen beiden Teile je eine Laufbahn für die Wälzkörper aufweisen und bei dem ein Teil einstückig mit einem Flansch zur Anbringung eines Fahrzeugrades verbunden ist, wobei Mittel zur drehfesten Verbindung mit einem Gelenkteil insbesondere eines Gleichlaufdrehgelenkes zum Antrieb des Flansches vorgesehen sind, und mit einem ungeteilten Lageraußenring zur Befestigung am Radträger des Fahrzeuges, dadurch gekennzeichnet, daß der zunächst ungeteilte Lagerinnenring (2) mit einbaufertigen Maßen hergestellt und anschließend durch Aufbringen von Druck durch Sprengen geteilt wird, daß die Sprengfuge (24) im Bereich zwischen den beiden Laufbahnen (20) der beiden Innenringteile (26, 27) angeordnet ist, daß als Mittel zur Befestigung mit einem Gelenkteil (1) Ausnehmungen (21) vorgesehen sind, in die entsprechende Vorsprünge (10) des Gelenkteiles (1) eingreifen und daß die Sprengfuge (24) durch die Ausnehmungen (21) verläuft und die beiden Innenringteile (26, 27) im montierten Zustand einander gegenüber verspannt sind.

2. Lagerungsanordnung nach Anspruch 1, dadurch gekennzeichnet, daß die Sprengfuge (24) unter einem Winkel ( α ), der vom rechten Winkel abweicht, die Lagerachse (X-X) schneidet.

3. Lagerungsanordnung nach Anspruch 1, dadurch gekennzeichnet, daß der Lagerinnenring (2) vor dem Sprengen mit Kerben (22) zur gerichteten Teilung versehen ist.

4. Lagerungsanordnung nach Anspruch 3, dadurch gekennzeichnet, daß die kerben (22) auf der Außenfläche (28) und Innenfläche (29) des Lagerinnenringes (2) angebracht und als Ringkerbern ausgebildet sind.

5. Lagerungsanordnung nach den Ansprüchen 3 oder 4, dadurch gekennzeichnet, daß die Kerben (22) entlang der Lagerachse (X-X) axial zueinander versetzt sind.

6. Lagerungsanordnung nach Anspruch 1, dadurch gekennzeichnet, daß die beiden Innenringteile (26, 27) umfangsverteilt zueinander fluchtende Bohrungen (23) zur Aufnahme von Verbindungsschrauben (5) aufweisen.

7. Lagerungsanordnung nach Anspruch 6, dadurch gekennzeichnet, daß eine der Bohrungen (23) als Gewindebohrung und die andere als Durchgangsbohrung ausgebildet ist.

8. Lagerungsanordnung nach Anspruch 6, dadurch gekennzeichnet, daß beide Bohrungen als Durchangsbohrungen (23) ausgebildet sind.

9. Lagerungsanordnung nach Anspruch 1, dadurch gekennzeichnet, daß das Gleichlaufdrehgelenk als Tripodegelenk ausgebildet ist, dessen einer Gelenkteil (1) drei von einem zentralen Teil ausgehende, auf dem Umfang gleichbeabstandete zylindrische Zapfen (10) aufweist, auf denen Rollen (13) dreh- und axialbewegbar angeordnet sind, daß die Rollen (13) in Bahnen (14) des anderen Gelenkteiles (11) geführt sind und das andere Gelenkteil (11) mit einer Antreibeswelle (17) verbunden ist und daß die drei Zapfen (10) des ersten Gelenkteils (1) in drei entsprechenden Ausnehmungen (21) des Lagerinnenringes (2) aufgenommen sind.

**Claims**

1. Bearing arrangement for the driven wheels of a motor vehicle, with a two-row rolling bearing for radial and axial forces, in particular with a double angular contact ball bearing, with a two-part inner bearing ring, the two-parts of which having each a race for the rolling elements, and one part of which is forming one piece with a flange for attaching a wheel of the vehicle, whereby means are provided for the rotatably fast connection to a joint member, in particular the joint member of a constant velocity universal joint for driving the flange, and with a single-part outer bearing ring for attachment to the wheel-carrier of the vehicle, characterized in that the initially one-part inner bearing ring (2) is produced in dimensions ready for installations and subsequently broken into two parts by the application of pressure, that the joint (24) is located in the area between the two races (20) of the two parts of the inner ring (26, 27) that recesses (21) are provided as a means for attachment to a joint member (1), in which recesses projections (10) of the joint member (1) engage, that the joint (24) passes through the recesses (21) and that in the assembled condition the two parts of the inner ring (26, 27) are fixed to each other so as to be tensioned.

2. Bearing arrangement in accordance with claim 1, characterized in that the joint (24) intersects the bearing axis (X-X) at an angle ( ) deviating from a right angle.

3. Bearing arrangement according to claim 1, characterized in that the inner bearing ring (2) is provided with notches (22) prior to breaking, for the purpose of directed seperation.

4. Bearing arrangement according to claim 3, characterized in that
the notches (22) are provided on to the outer surface (28) and inner surface (29) of the inner bearing ring (2) and are designed as annular notches.

5. Bearing arrangement according to claims 3 or 4, characterized in that the notches (22) are displaced axially relative to each other along the bearing axis (X-X).

6. Bearing arrangement according to claim 1, characterized in that the two parts of the inner ring (26, 27) have aligned boreholes (23) which are circumferentially distributed for receiving connecting bolts (5).

7. Bearing arrangement according to claim 6, characterized in that one of the boreholes (23) is designed as a tapped borehole and the other borehole is designed as a through-borehole.

8. Bearing arrangement according to claim 6, characterized in that both boreholes are designed as through-boreholes (23).

9. Bearing arrangement according to claim 1, characterized in that the constant velocity universal joint is designed as a tripod joint, one joint member (1) of which has three cylindrical trunnions (10) emanating from a central part and equally spaced circumferentially, on which trunnion rollers are mounted and axially movable direction, that the rollers (13) are guided in races (14) of the other joint member (11), that the other joint member (11) is connected to a drive shaft (17), and that the three trunnions (10) of the first joint member (1) are received in three corresponding recesses (21) in the inner bearing ring (2).

## Revendications

1. Dispositif à palier pour les roues motrices d'un véhicule automobile, avec un palier à deux rangées de roulements recevant des forces radiales et axiales, notamment un double roulement à billes à contact oblique, comportant une bague de palier intérieure en deux parties dont chacune présente un chemin de roulement pour les organes de roulement et dont l'une des parties est conformée en une seule pièce avec un flasque pour la fixation d'une roue de véhicule, des moyens pour solidariser ledit flasque en rotation avec une partie de joint articulé notamment d'un joint articulé homocinétique pour l'entraînement du flasque, ainsi qu'une bague de palier extérieure indivise destinée à être fixée au support de roue du véhicule, caractérisé par le fait que la bague de palier intérieure (2) initialement indivise est fabriquée avec les cotes prêtes au montage et ensuite est subdivisée par application d'une pression conduisant à son éclatement, que la fente d'éclatement (24) est disposée dans la zone située entre les deux chemins de roulement (20) des deux parties de bague intérieure (26, 27), qu'en tant que moyens pour solidariser une partie de joint articulé (1) sont prévus des évidements (21), dans lesquels s'engagent des éléments saillants correspondants (10) de la partie de joint articulé (1), que la fente d'éclatement (24) passe à travers les évidements (21) et que les deux parties de bague intérieure (26, 27) sont, à l'état de montage, serrées l'une contre l'autre.

2. Dispositif à palier selon la revendication 1, caractérisé par le fait que la fente d'éclatement (24) coupe l'axe de palier (x–x) sous un angle (α), qui diffère de l'angle droit.

3. Dispositif à palier selon la revendication 1, caractérisé par le fait qu'avant l'éclatement, la bague de palier intérieure (2) est munie d'encoches (22) pour obtenir une subdivision orientée.

4. Dispositif à palier selon la revendication 3, caractérisé par le fait que les encoches (22) sont prévues sur les faces extérieure (28) et intérieure (29) de la bague de palier intérieure (2) et sont conformées en tant qu'encoches annulaires.

5. Dispositif à palier selon l'une des revendications 3 et 4, caractérisé par le fait que les encoches (22) sont décalées axialement les unes par rapport aux autres suivant l'axe de palier (x–x).

6. Dispositif à palier selon la revendication 1, caractérisé par le fait que les deux parties de bague intérieurs (26, 27) présentent des alésages (23), qui sont répartis sur le pourtour desdites parties, sont alignés les uns par rapport aux autres et sont destinés à recevoir des vis de jonction (5).

7. Dispositif à palier selon la revendication 6, caractérisé par le fait que l'un des alésages (23) est conformé en alésage taraudé et l'autre en alésage traversant.

8. Dispositif à palier selon la revendication 6, caractérisé par le fait que les deux alésages sont conformés en alésages traversants (23).

9. Dispositif à palier selon la revendication 1, caractérisé par le fait que le joint articulé homocinétique est conformé en joint tripode dont une partie de joint articulé (1), présente trois tourillons cylindriques (10) qui s'étendent à partir d'un élément central, sont répartis sur le pourtour d'une façon équidistante et sont munis de rouleaux (13) mobiles en rotation et déplacement axial, que les rouleaux (13) sont guidés dans les chemins de roulement (14) de l'autre partie de joint (11), que l'autre partie de joint articulé (11) est reliée à un arbre moteur (17) et que les trois tourillons (10) de la première partie de joint articulé (1) sont logés dans trois évidements correspondants (21) de la bague de palier intérieure (2).